# EUROPÄISCHE PATENTSCHRIFT

(11) **EP 1 263 822 B1**
(45) Veröffentlichungstag und Bekanntmachung des Hinweises auf die Patenterteilung: **02.05.2018**
(21) Anmeldenummer: 01915221.4
(22) Anmeldetag: 12.02.2001
(51) Int. Cl.: C08F 279/04, C08F 279/02, C08L 25/12, C08L 55/02, C08L 51/04

(54) **VERFAHREN ZUR HERSTELLUNG VON POLYMERZUSAMMENSETZUNGEN MIT VERBESSERTER EIGENSCHAFTSKONSTANZ**
PROCESS FOR PREPARING POLYMER COMPOSITIONS WITH AN IMPROVED CONSTANCY OF CHARACTERISTICS
PROCÉDÉ DE PRÉPARATION DE COMPOSITIONS POLYMÈRES AYANT UNE MEILLEURE CONSTANCE DES PROPRIÉTÉS

(30) Priorität: 23.02.2000 DE 10008419
(43) Veröffentlichungstag der Anmeldung: 11.12.2002
(73) Patentinhaber: Ineos ABS (Jersey) Limited, Channel Islands (GB)
(72) Erfinder: EICHENAUER, Herbert, 41539 Dormagen (DE); SCHMIDT, Adolf, 74740 Adelsheim (DE); JANSEN, Ulrich, 41541 Dormagen (DE)
(74) Vertreter: Gille Hrabal
(86) Internationale Anmeldenummer: PCT/EP2001/001496
(87) Internationale Veröffentlichungsnummer: WO 2001/062812

(56) Entgegenhaltungen:
- EP-A- 0 116 330
- EP-A- 0 134 519
- EP-A- 0 412 371
- EP-A- 0 678 531
- EP-A- 0 845 496
- DE-A- 2 420 358
- DE-A- 3 913 509
- US-A- 5 719 232

## Beschreibung

ABS-Formmassen bzw. Formmassen vom ABS-Typ werden schon seit vielen Jahren in großen Mengen als thermoplastische Harze für die Herstellung von Formteilen aller Art eingesetzt. Dabei kann das Eigenschaftsspektrum dieser Harze in weiten Bereichen variiert werden.

Als besonders wichtige Eigenschaften von ABS-Formmassen seien Zähigkeit (Schlagzähigkeit, Kerbschlagzähigkeit), E-Modul, Verarbeitbarkeit (MVR), Wärmeformbeständigkeit, Oberflächenglanz genannt, wobei es in Abhängigkeit vom Einsatzgebiet im allgemeinen auf definierte Eigenschaftskombinationen ankommt.

Ein besonders wichtiges Merkmal für den Verarbeiter von ABS-Formmassen stellt, insbesondere bei Nutzung vollautomatischer Fertigungsanlagen, die Konstanz von Eigenschaften oder Eigenschaftskombinationen der zu verarbeitenden Formmassen dar.

Zwar lassen sich durch Nutzung moderner Verfahren bei der ABS-Herstellung (z.B. Computersteuerung von Polymerisation und Compoundierung) Produkte mit relativ engen Toleranzgrenzen herstellen, trotzdem ist für spezielle Anwendungen eine nur über die Produktzusammensetzung bzw. den Produktaufbau erreichbare noch höhere Eigenschaftskonstanz notwendig.

Es bestand daher die Aufgabe, thermoplastische Formmassen vom ABS-Typ herzustellen, die ein sehr konstantes Eigenschaftsprofil aufweisen.

Die erfindungsgemäße Aufgabe wird gelöst durch den Einsatz von Kombinationen zweier Pfropfkautschukpolymerisate, bei deren Herstellung unter Verwendung von Saatlatexteilchen mit definierten Teilchendurchmessern durch Saatpolymerisation erhaltene Kautschuke mit definierten Teilchendurchmessern eingesetzt werden.

Die EP0678531 (A1) beschreibt thermoplastische Formmassen vom ABS-Typ aus A) mindestens einem Pfropfpolymerisat, welches erhältlich ist durch Emulsionspolymerisation von Styrol und Acrylnitril im Gewichtsverhältnis 90:10 bis 50:50, wobei Styrol und/oder Acrylnitril ganz oder teilweise ersetzt werden kann durch α-Methylstyrol, Methylmethacrylat oder N-Phenylmaleinimid, in Gegenwart von mindestens zwei Butadienpolymerisatlatices vom Typ (A) und (B), welche jeweils 0 bis 50 Gew.-% eines weiteren Vinylmonomeren copolymerisiert enthalten und wobei das Massenverhältnis von eingesetzten Monomeren zu eingesetzten Butadienpolymerisaten 25:75 bis 70:30 beträgt und B) mindestens einem Copolymerisat aus Styrol und Acrylnitril im Gewichtsverhältnis 90:10 bis 50:50, wobei Styrol und/oder Acrylnitril ganz oder teilweise durch α-Methylstyrol, Methylmethacrylat oder N-Phenylmaleinimid ersetzt werden kann, dadurch gekennzeichnet, dass der Butadienpolymerisatlatex (A) einen Teilchendurchmesser d₅₀ ≤ 250 nm, eine Breite der Teilchengrößenverteilung (gemessen als d₉₀-d₁₀ aus der integralen Teilchengrößenverteilung) von 500 bis 1000 nm und einen Gelgehalt ≤ 70 Gew.-% besitzt, der Butadienpolymerisatlatex (B) einen Teilchendurchmesser d₅₀ ≥ 300 nm, eine Breite der Teilchengrößenverteilung (gemessen als d₉₀-d₁₀ aus der integralen Teilchengrößenverteilung) von 50 bis 500 nm und einen Gelgehalt ≥ 70 Gew.-% besitzt und die Pfropfpolymerisation durch Monomerenzulauf zum Gemisch der Butadienpolymerisatlatices (A) und (B) in der Weise erfolgt, daß innerhalb der ersten Hälfte der Monomerenzulaufzeit 55 bis 90 Gew.-% der Monomeren zudosiert werden.

Die EP0845496 (A2) beschreibt thermoplastische Formmassen vom Typ Acrylnitril-Butadien-Styrol (ABS) enthaltend Pfropfpolymerisate (I) und Pfropfpolymerisate (II), beide hergestellt durch Emulsionspolymerisation, und ein kautschukfreies Copolymer aus Styrol und Acrylnitril. Die Pfropfpolymerisate werden durch Polymerisation von Styrol und Acrylnitril in Gegenwart von: (i) einer Mischung aus Butadienpolymerlatices (A) und (B) und (ii) Butadienpolymerlatex (C) hergestellt. Diese haben einen Teilchendurchmesser d50 von (A) ≤ 320, (B) ≥ 370, (C) 110-150 nm; eine Teilchengrößenverteilung (d90-d10) von (A) 30-100, (B) 50-500, (C) 20-50 nm; und einen Gelgehalt von (A) ≤ 70, (B) ≥ 70, (C) 80-98 Gew .-% %. Das Gewichtsverhältnis von Pfropfmonomeren zu Butadienpolymer(en) beträgt (I) 25:75 bis 70:30, (II) 30:70 bis 60:40. Die Latices (A), (B) und (C) enthalten 0-50 Gew .-% copolymerisiertes Vinylmonomer. Das Gewichtsverhältnis Styrol und Acrylnitril beträgt 90:10 bis 50:50, und Styrol und / oder Acrylnitril können (teilweise) durch α-Methylstyrol, Methylmethacrylat oder N-Phenylmaleinimid ersetzt werden.

Die EP0116330 (A1) beschreibt in Emulsion hergestellte thermoplastische Formmassen vom ABS-Typ mit gegenüber bekannten ABS-Formmassen verbesserten Eigenschaften, insbesondere hoher Zähigkeit bei leichter Verarbeitbarkeit und gutem Oberflächenglanz

Die EP0134519 (A2) beschreibt eine thermoplastische Harzzusammensetzung, umfassend (A) 10 bis 90 Gew.-Teile eines Imid-modifizierten Polymers mit einer Imidogruppe, erhalten
durch Umsetzung von Ammoniak und / oder einem primären Amin zu einem Copolymer, hergestellt durch Polymerisation einer Monomermischung, die 50 bis 70 Gew .-% eines aromatischen Vinylmonomeren und 30 bis 50 Gew .-% eines ungesättigten Dicarbonsäureanhydrids; (B) 10 bis 90 Gew.-Teile eines Pfropfcopolymers, hergestellt durch Copolymerisation von 30 bis 75 Gew .-% einer Mischung, umfassend 40 bis 80 Gew .-% eines kautschukartigen Polymers mit einer gewichtsmittleren Teilchengröße von 0,3 bis 0,6 µm und 20 bis 60 Gew .-% eines kautschukartigen Polymers mit einer gewichtsmittleren Teilchengröße von 0,1 bis 0,2 um, mit 25 bis 70 Gew .-% einer Monomermischung, umfassend 55 bis 75 Gew .-% eines aromatischen Vinylmonomers und 25 bis 45 Gew .-% eines Vinylcyanidmonomers, wobei das kautschukartige Polymer ein Butadien-Polymer oder ein Butadien-Copolymer enthaltend mindestens 50 Gew .-% Butadien ist; und (C) 0 bis 80 Gew.-Teile eines Copolymers, hergestellt durch Polymerisieren von 40 bis 80 Gew .-% eines aromatischen Vinylmonomeren, 0 bis 40 Gew .-% eines Vinylcyanidmonomers und 0 bis 40 Gew .-% eines Vinylmonomers, das damit copolymerisierbar ist.

Die EP0412371 (A1) beschreibt thermoplastische Formmassen enthaltend A) 5-95 Gew .-% eines thermoplastischen Homo-, Co- oder Terpolymers von Styrol, alpha-Methylstyrol, kernsubstituiertem Styrol, Methylmethacrylat, Acrylnitril, Methacrylnitril, Maleinsäureanhydrid, N-substituiertem Maleinimid, Vinylacetat oder Mischungen davon, B) 5-90 Gew .-% eines Pfropfpolymers von B.1) 5-90 Gew.-Teilen Styrol, alpha-Methylstyrol, im Kern substituiertem Styrol, Methylmethacrylat, Acrylnitril, Methacrylnitril, Maleinsäureanhydrid, N-substituiertem Maleimid, Vinylacetat oder Mischungen davon auf B.2) 95-10 Gew.-Teilen eines Kautschuks mit einer Glasübergangstemperatur von ≤10 °C und C) 0,1-5 Gew.-Teile pro 100 Teile eines A + B-Pfropfproduktes aus harzbildenden Monomeren auf einem Ethylen / Propylen / Dien-Terpolymer-Kautschuk mit einem Kautschukgehalt von 20 bis 60 Gew.-%.

Gegenstand der Erfindung ist ein Verfahren zur Herstellung von Polymerzusammensetzungen gemäß den Patentansprüchen.

Gegenstand der vorliegenden Erfindung ist insbesondere ein Verfahren zur Herstellung der erfindungsgemäßen Polymerzusammensetzungen, wobei der Butadienpolymerisatlatex (A) erhalten wird durch Saatpolymerisation unter Verwendung eines Saatlatex mit einem mittleren Teilchendurchmesser von 10 bis 100 nm und der Butadienpolymerisatlatex (B) erhalten wird durch Saatpolymerisation unter Verwendung von Butadienpolymerisatlatex (A) als Saatlatex.

Im allgemeinen können die mit dem erfindungsgemäßen Verfahren erhältlichen Polymerzusammensetzungen die Pfropfkautschukkomponenten (I) + (II) in Anteilen von 1 bis 60 Gew.-Teilen, vorzugsweise 5 bis 50 Gew.-Teilen, und die kautschukfreie Harzkomponente (III) in Anteilen von 40 bis 99 Gew.-Teilen, vorzugsweise 50 bis 95 Gew.-Teilen, enthalten. Das Gew.-Verhältnis (I):(II) kann in weiten Grenzen variiert werden; üblicherweise beträgt es 90:10 bis 10:90, vorzugsweise 80:20 bis 30:70 und besonders bevorzugt 70:30 bis 40:60.

Außer den genannten Polymerkomponenten können die Polymerzusammensetzungen weitere kautschukfreie nicht aus Vinylmonomeren aufgebaute Thermoplastharze enthalten, wobei man diese Thermoplastharze in Mengen bis zu 1000 Gew.-Teilen, vorzugsweise bis zu 700 Gew.-Teilen und besonders bevorzugt bis zu 500 Gew.-Teilen (jeweils bezogen auf 100 Gew.-Teile I + II + III) verwendet. Die Butadienpolymerisatlatices (A) und (B) werden durch Emulsionspolymerisation von Butadien nach der sogenannten Saatpolymerisationstechnik hergestellt, bei der zunächst ein feinteiliges Polymerisat, vorzugsweise ein Butadienpolymerisat, als Saatlatex hergestellt und dann durch Weiterumsatz mit Butadien enthaltenden Monomeren zu größeren Teilchen weiterpolymerisiert wird (siehe z.B. in Houben-Weyl, Methoden der Organischen Chemie, Makromolekulare Stoffe Teil 1, S. 339 (1961), Thieme Verlag Stuttgart). Dabei wird vorzugsweise unter Verwendung des Saat-Batch-Verfahrens oder Verwendung des Saat-Zulauf-Verfahrens gearbeitet.

Als Comonomere können bis zu 50 Gew.-% (bezogen auf die gesamte zur Butadienpolymerisatherstellung eingesetzte Monomermenge) eines oder mehrerer mit Butadien copolymerisierbarer Monomerer eingesetzt werden.

Beispiele für solche Monomere sind Isopren, Chloropren, Acrylnitril, Styrol, α-Methylstyrol, C₁-C₄-Alkylstyrole, C₁-C₈-Alkylacrylate, C₁-C₈-Alkylmethacrylate, Alkylenglykoldiacrylate, Alkylenglykoldimethacrylate, Divinylbenzol; vorzugsweise wird Butadien alleine oder in Abmischung mit bis zu 20 Gew.-%, vorzugsweise mit bis zu 10 Gew.-% Styrol und/oder Acrylnitril eingesetzt.

Als Saatlatexpolymere werden vorzugsweise Butadienpolymerisate wie z.B. Polybutadien, Butadien / Styrol - Copolymerisate, Butadien / Acrylnitril - Copolymerisate oder Polymerisate aus den oben genannten Monomeren eingesetzt.

Im Prinzip können auch andere feinteilige Latexpolymere wie z.B. Polystyrol oder Styrolcopolymerisate, Polymethylmethacrylat oder Methylmethacrylatcopolymere sowie Polymerisate anderer Vinylmonomerer verwendet werden.

Bevorzugte Saatlatexpolymere sind Polybutadienlatices.

Dabei wird bei der Herstellung des Butadienpolymerisatlatex (A) ein Saatlatex mit einem mittleren Teilchendurchmesser d₅₀ von 10 bis 100 mm, vorzugsweise 20 bis 90 nm und besonders bevorzugt 30 bis 80 nm eingesetzt.

Bei der Herstellung des Butadienpolymerisatlatex (B) wird der Butadienpolymerisatlatex (A) als Saatlatex eingesetzt.

Der Saatlatex zur Herstellung des Butadienpolymerisat (A) besitzt bevorzugt einen Gelgehalt von 10 bis 95 Gew.-%, vorzugsweise von 20 bis 90 Gew.-% und besonders bevorzugt von 30 bis 85 Gew.-%.

Der Butadienpolymerisatlatex (A) besitzt einen mittleren Teilchendurchmesser d₅₀ von 80 bis 220 nm, vorzugsweise von 90 bis 210 nm und besonders bevorzugt von 100 bis 200 nm.

Der Gelgehalt von (A) beträgt bevorzugt 30 bis 98 Gew.-%, vorzugsweise 40 bis 95 Gew.-% und besonders bevorzugt 50 bis 92 Gew.-%.

Der Butadienpolymerisatlatex (B) besitzt einen mittleren Teilchendurchmesser d₅₀ von 340 bis 480 nm, vorzugsweise von 350 bis 470 nm und besonders bevorzugt von 360 bis 460 nm.

Der Gelgehalt von (B) beträgt 50 bis 95 Gew.-%, vorzugsweise 55 bis 90 Gew.-% und besonders bevorzugt 60 bis 85 Gew.%.

Die Bestimmung des mittleren Teilchendurchmessers d₅₀ kann durch Ultrazentrifugenmessung ermittelt werden (vgl. W. Scholtan, H. Lange: Kolloid Z. u. Z. Polymere 250, S. 782 bis 796 (1972)), die angegebenen Werte für den Gelgehalt beziehen sich auf die Bestimmung nach der Drahtkäfigmethode in Toluol (vgl. Houben-Weyl, Methoden der Organischen Chemie, Makromolekulare Stoffe, Teil 1, S. 307 (1961), Thieme Verlag Stuttgart).

Die Gelgehalte der Butadienpolymerisatlatices (A) und (B) sowie des Saatpolymerlatex zur Herstellung von Butadienpolymerisatlatex (A) können in prinzipiell bekannter Weise durch Anwendung geeigneter Reaktionsbedingungen eingestellt werden (z.B. hohe Reaktionstemperatur und/oder Polymerisation bis zu hohem Umsatz sowie gegebenenfalls Zusatz vernetzend wirkender Substanzen zur Erzielung eines hohen Gelgehaltes oder z.B. niedrige Reaktionstemperatur und/oder Abbruch der Polymerisationsreaktion vor Eintreten einer zu starken Vernetzung sowie gegebenenfalls Zusatz von Molekulargewichtsreglern wie beispielsweise n-Dodecylmercaptan oder t-Dodecylmercaptan zur Erzielung eines niedrigen Gelgehaltes). Als Emulgator können übliche anionische Emulgatoren wie Alkylsulfate, Alkylsulfonate, Aralkylsulfonate, Seifen gesättigter oder ungesättigter Fettsäuren sowie alkalischer disproportionierter oder hydrierter Abietin- oder Tallölsäuren verwendet werden, vorzugsweise werden Emulgatoren mit Carboxylgruppen (z.B. Salze von C₁₀-C₁₈-Fettsäuren, disproportionierte Abietinsäure, Emulgatoren gemäß DE-OS 36 39 904 und DE-OS 39 13 509) eingesetzt.

Die Herstellung der Pfropfkautschukpolymerisate (I) und (II) kann beliebig durch separate Pfropfung der Butadienpolymerisatlatices (A) und (B) in getrennten Reaktionen oder durch gemeinsame Pfropfung einer Mischung der Butadienpolymerisatlatices (A) und (B) während einer Reaktion durchgeführt werden.

Dabei können die Pfropfpolymerisation(en) nach beliebigen Verfahren durchgeführt werden, vorzugsweise wird bzw. werden sie so durchgeführt, dass das Monomergemisch kontinuierlich zum Butadienpolymerisatlatex (A) bzw. zum Butadienpolymerisatlatex (B) bzw. zu einem Gemisch der Butadienpolymerisatlatices (A) und (B) gegeben und polymerisiert wird.

Dabei werden bevorzugt spezielle Monomer-/Kautschuk-Verhältnisse eingehalten und die Monomeren in einer bekannten Weise zum Kautschuk gegeben:
Zur Erzeugung der erfindungsgemäßen Komponenten (I) und (II) werden vorzugsweise 15 bis 50 Gew.-Teile, besonders bevorzugt 20 bis 40 Gew.-Teile, eines Gemisches aus Styrol und Acrylnitril, das gegebenenfalls bis zu 50 Gew.-% (bezogen auf Gesamtmenge der in der Pfropfpolymerisation eingesetzten Monomeren) eines oder mehrerer Comonomerer enthalten kann, in Gegenwart von vorzugsweise 50 bis 85 Gew.-Teilen, besonders bevorzugt 60 bis 80 Gew.-Teilen (jeweils bezogen auf Feststoff) des Butadienpolymerisatlatex (A) bzw. des Butadienpolymerisatlatex (B) bzw. eines Gemisches der Butadienpolymerisatlatices (A) und (B) polymerisiert.

Die bei der Pfropfpolymerisation eingesetzten Monomeren sind vorzugsweise Mischungen aus Styrol und Acrylnitril im Gew.-Verhältnis 95:5 bis 50:50, besonders bevorzugt im Gew.-Verhältnis 80:20 bis 65:35,

Prinzipiell können zusätzlich beliebige weitere copolymerisierbare Vinylmonomere in Mengen bis ca. 10 Gew.-% (bezogen auf Gesamtmenge der Monomeren) mitverwendet werden.

Zusätzlich können bei der Pfropfpolymerisation Molekulargewichtsregler eingesetzt werden, vorzugsweise in Mengen von 0,01 bis 2 Gew.-%, besonders bevorzugt in Mengen von 0,05 bis 1 Gew.-% (jeweils bezogen auf Gesamtmonomermenge in der Pfropfpolymerisationstufe).

Geeignete Molekulargewichtsregler sind beispielsweise Alkylmercaptane wie n-Dodecylmercaptan, t-Dodecylmercaptan; dimeres α-Methylstyrol; Terpinolen.

Als Initiatoren kommen anorganische und organische Peroxide, z.B. H₂O₂, Di-tert.-Butylperoxid, Cumolhydroperoxid, Dicyclohexylpercarbonat, tert.-Butylhydroperoxid, p-Menthanhydroperoxid, Azoinitiatoren wie Azobisisobutyronitril, anorganische Persalze wie Ammonium-, Natrium- oder Kaliumpersulfat, Kaliumperphosphat, Natriumperborat sowie Redox-Systeme in Betracht. Redox-Systeme bestehen in der Regel aus einem organischen Oxidationsmittel und einem Reduktionsmittel, wobei im Reaktionsmedium zusätzlich Schwermetallionen vorhanden sein können (siehe Houben-Weyl, Methoden der Organischen Chemie, Band 14/1, S. 263 bis 297).

Die Polymerisationstemperatur ist im allgemeinen 25°C bis 160°C, vorzugsweise 40°C bis 90°C. Geeignete Emulgatoren sind oben angegeben.

Dabei kann nach üblicher Temperaturführung, z.B. isotherm, gearbeitet werden; vorzugsweise wird die Pfropfpolymerisation jedoch so durchgeführt, dass der Temperaturunterschied zwischen Beginn und Ende der Reaktion mindestens 10°C, vorzugsweise mindestens 15°C und besonders bevorzugt mindestens 20°C beträgt.

Zur Erzeugung der erfindungsgemäßen Komponenten I) und II) kann die Pfropfpolymerisation vorzugsweise durch Monomerenzulauf derart durchgeführt werden, dass innerhalb der ersten Hälfte der Gesamtmonomerenzudosierzeit 55 bis 90 Gew.-%, vorzugsweise 60 bis 80 Gew.-% und besonders bevorzugt 65 bis 75 Gew.-% der gesamten bei der Pfropfpolymerisation einzusetzenden Monomeren zudosiert werden; der verbleibende Monomeranteil wird innerhalb der zweiten Hälfte der Gesamtmonomerzudosierzeit zudosiert.

Als kautschukfreie Copolymerisate III) werden vorzugsweise Copolymerisate des Styrols und Acrylnitrils im Gewichtsverhältnis 95:5 bis 50:50 verwendet,

Besonders bevorzugt sind Copolymerisate III) mit Anteilen an eingebauten Acrylnitril-Einheiten <30 Gew.-%.

Diese Copolymerisate besitzen vorzugsweise mittlere Molekulargewichte M̅_{W} von 20 000 bis 200 000 bzw. Grenzviskositäten [η] von 20 bis 110 ml/g (gemessen in Dimethylformamid bei 25°C).

Einzelheiten zur Herstellung dieser Harze sind beispielsweise in der DE-A 2 420 358 und der DE-A 2 724 360 beschrieben. Durch Masse- bzw. Lösungspolymerisation hergestellte Vinylharze haben sich besonders bewährt. Die Copolymerisate können allein oder in beliebiger Mischung zugesetzt werden.

Außer aus Vinylmonomeren aufgebauten Thermoplastharzen ist auch die Verwendung von Polykondensaten z.B. aromatischen Polycarbonaten, aromatischen Polyestercarbonaten, Polyestern, Polyamiden als kautschukfreies Copolymerisat in den erfindungsgemäßen Formmassen möglich.

Geeignete thermoplastische Polycarbonate und Polyestercarbonate sind bekannt (vgl. z.B. DE-A 1 495 626, DE-A 2 232 877, DE-A 2 703 376, DE-A 2 714 544, DE-A 3 000 610, DE-A 3 832 396, DE-A 3 007 934), z.B. herstellbar durch Umsetzung von Diphenolen der Formeln (IV) und (V) 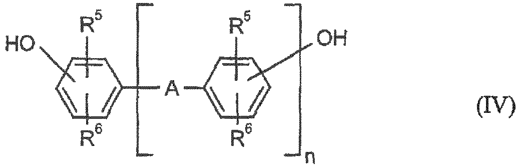 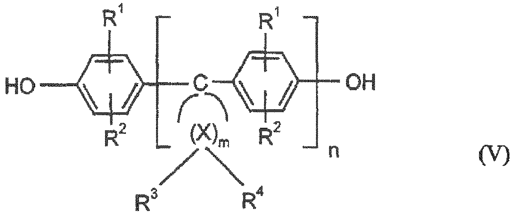 worin
- A: eine Einfachbindung, C₁-C₅-Allrylen, C₂-C₅-Alkyliden, C₅-C₆-Cycloalkyl-iden, -O-, -S-, -SO-, -SO₂- oder -CO- ist,
- R⁵ und R⁶: unabhängig voneinander für Wasserstoff, Methyl oder Halogen, insbesondere für Wasserstoff, Methyl, Chlor oder Brom stehen,
- R¹ und R²: unabhängig voneinander Wasserstoff, Halogen bevorzugt Chlor oder Brom, C₁-C₈-Alkyl, bevorzugt Methyl, Ethyl, C₅-C₆-Cycloalkyl, bevorzugt Cyclohexyl, C₆-C₁₀-Aryl, bevorzugt Phenyl, oder C₇-C₁₂-Aralkyl, bevorzugt Phenyl-C₁-C₄-alkyl, insbesondere Benzyl, bedeuten,
- m: eine ganze Zahl von 4 bis 7, bevorzugt 4 oder 5 ist,
- n: 0 oder 1 ist,
- R³ und R⁴: für jedes X individuell wählbar sind und unabhängig voneinander Wasserstoff oder C₁-C₆-Alkyl bedeuten und
- X: Kohlenstoff bedeutet,
mit Kohlensäurehalogeniden, vorzugsweise Phosgen, und/oder mit aromatischen Dicarbonsäuredihalogeniden, vorzugsweise Benzoldicarbonsäuredihalogeniden, durch Phasengrenzflächen-Polykondensation oder mit Phosgen durch Polykondensation in homogener Phase (dem sogenannten Pyridinverfahren), wobei das Molekulargewicht in bekannter Weise durch eine entsprechende Menge an bekannten Kettenabbrechern eingestellt werden kann.

Geeignete Diphenole der Formeln (IV) und (V) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 2,2-Bis-(4-hydroxy-3,5-dimethylphenyl)-propan, 2,2-Bis-(4-hydroxy-3,5-dichlorphenyl)-propan, 2,2-Bis-(4-hydroxy-3,5-dibromphenyl)-propan, 1,1-Bis-(4-hydroxyphenyl)-cyclohexan, 1,1-Bis-(4-hydroxyphenyl)-3,3,5-trimethylcyclohexan, 1,1-Bis-(4-hydroxyphenyl)-3,3-dimethylcyclohexan, 1,1-Bis-(4-hydroxyphenyl)-3,3,5,5-tetramethylcyclohexan oder 1,1-Bis-(4-hydroxyphenyl)-2,4,4,-trimethylcyclopentan.

Bevorzugte Diphenole der Formel (IV) sind 2,2-Bis-(4-hydroxyphenyl)-propan und 1,1-Bis-(4-hydroxyphenyl)-cyclohexan, bevorzugtes Phenol der Formel (V) ist 1,1-Bis-(4-hydroxyphenyl)-3,3,5-trimethylcyclohexan.

Es können auch Mischungen von Diphenolen eingesetzt werden.

Geeignete Kettenabbrecher sind z.B. Phenol, p-tert.-Butylphenol, langkettige Alkylphenole wie 4-(1,3-Tetramethyl-butyl)phenol gemäß DE-A 2 842 005, Monoalkylphenole, Dialkylphenole mit insgesamt 8 bis 20 C-Atomen in den Alkylsubstituenten gemäß DE-A 3 506 472, wie p-Nonylphenol, 2,5-di-tert.-Butylphenol, p-tert.-Octylphenol, p-Dodecylphenol, 2-(3,5-Dimethylheptyl)-phenol und 4-(3,5-Dimethylheptyl)-phenol. Die erforderliche Menge an Kettenabbrechern ist im allgemeinen 0,5 bis 10 Mol-%, bezogen auf die Summe der Diphenole (IV) und (V).

Die geeigneten Polycarbonate bzw. Polyestercarbonate können linear oder verzweigt sein; verzweigte Produkte werden vorzugsweise durch den Einbau von 0,05 bis 2,0 Mol-%, bezogen auf die Summe der eingesetzten Diphenole, an drei - oder mehr als dreifunktionellen Verbindungen, z.B. solchen mit drei oder mehr als drei phenolischen OH-Gruppen, erhalten.

Die geeigneten Polycarbonate bzw. Polyestercarbonate können aromatisch gebundenes Halogen, vorzugsweise Brom und/oder Chlor, enthalten; vorzugsweise sind sie halogenfrei.

Sie haben mittlere Molekulargewichte (M̅_{W}, Gewichtsmittel) bestimmt z.B. durch Ultrazentrifugation oder Streulichtmessung von 10 000 bis 200 000, vorzugsweise von 20 000 bis 80 000.

Geeignete thermoplastische Polyester sind vorzugsweise Polyalkylenterephthalate, d.h., Reaktionsprodukte aus aromatischen Dicarbonsäuren oder ihren reaktionsfähigen Derivaten (z.B. Dimethylestern oder Anhydriden) und aliphatischen, cycloaliphatischen oder arylaliphatischen Diolen und Mischungen solcher Reaktionsprodukte.

Bevorzugte Polyalkylenterephthalate lassen sich aus Terephthalsäuren (oder ihren reaktionsfähigen Derivaten) und aliphatischen oder cycloaliphatischen Diolen mit 2 bis 10 C-Atomen nach bekannten Methoden herstellen (Kunststoff-Handbuch, Band VIII, S. 695 ff, Carl Hanser Verlag, München 1973).

In bevorzugten Polyalkylenterephthalaten sind 80 bis 100, vorzugsweise 90 bis 100 Mol-% der Dicarbonsäurereste, Terephthalsäurereste und 80 bis 100, vorzugsweise 90 bis 100 Mol-% der Diolreste, Ethylenglykol- und/oder Butandiol-1,4-Reste.

Die bevorzugten Polyalkylenterephthalate können neben Ethylenglykol- bzw. Butandiol-1,4-Resten 0 bis 20 Mol-% Reste anderer aliphatischer Diole mit 3 bis 12 C-Atomen oder cycloaliphatischer Diole mit 6 bis 12 C-Atomen enthalten, z.B. Reste von Propandiol-1,3, 2-Ethylpropandiol-1,3, Neopentylglykol, Pentandiol-1,5, Hexandiol-1,6, Cyclohexandi-methanol-1,4, 3-Methylpentandiol-1,3 und -1,6, 2-Ethylhexandiol-1,3, 2,2-Diethylpropandiol-1,3, Hexandiol-2,5, 1,4-Di(β-hydroxyethoxy)-benzol, 2,2,-Bis-4-hydroxycyclohexyl)-propan, 2,4-Dihydroxy-1,1,3,3-tetramethylcyclobutan, 2,2-Bis-(3-ß-hydroxyethoxyphenyl)-propan und 2,2-Bis-(4-hydroxypropoxyphenyl)-propan (DE-OS, 2 507 776, 2 715 932).

Die Polyalkylenterephthalate können durch Einbau relativ kleiner Mengen 3- oder 4-wertiger Alkohole oder 3- oder 4-basiger Carbonsäuren, wie sie in der DE-OS 1 900 270 und der US-PS 3 692 744 beschrieben sind, verzweigt werden. Beispiele bevorzugter Verzweigungsmittel sind Trimesinsäure, Trimellithsäure, Trimethylolethan und -propan und Pentaerythrit. Es ist ratsam, nicht mehr als 1 Mol-% des Verzweigungsmittels, bezogen auf die Säurekomponente, zu verwenden.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind und Mischungen dieser Polyalkylenterephthalate.

Bevorzugte Polyalkylenterephthalate sind auch Copolyester, die aus mindestens zwei der oben genannten Alkoholkomponenten hergestellt sind: besonders bevorzugte Copolyester sind Poly-(ethylenglykolbutandiol-1,4)-terephthalate.

Die vorzugsweise geeigneten Polyalkylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1:1 Gew.-Teile) bei 25°C.

Geeignete Polyamide sind bekannte Homopolyamide, Copolyamide und Mischungen dieser Polyamide. Es können dies teilkristalline und/oder amorphe Polyamide sein.

Als teilkristalline Polyamide sind Polyamid-6, Polyamid-6,6, Mischungen und entsprechende Copolymerisate aus diesen Komponenten geeignet. Weiterhin kommen teilkristalline Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylen-diamin und/oder Hexamethylendiamin und/oder 2,2,4-Trimethylhexamethylendiamin und/oder 2,2,4-Trimethylhexamethylendiamin und/oder Isophorondiamin besteht und deren Zusammensetzung prinzipiell bekannt ist.

Außerdem sind Polyamide zu nennen, die ganz oder teilweise aus Lactamen mit 7-12 C-Atomen im Ring, gegebenenfalls unter Mitverwendung einer oder mehrerer der oben genannten Ausgangskomponenten, hergestellt werden.

Besonders bevorzugte teilkristalline Polyamide sind Polyamid-6 und Polyamid-6,6 und ihre Mischungen. Als amorphe Polyamide können bekannte Produkte eingesetzt werden. Sie werden erhalten durch Polykondensation von Diaminen wie Ethylendiamin, Hexamethylendiamin, Decamethylendiamin, 2,2,4- und/oder 2,4,4-Trimethylhexamethylendiamin, m- und/oder p-Xylylen-diamin, Bis-(4-aminocyclohexyl)-methan, Bis-(4-aminocyclohexyl)-propan, 3,3'-Dimethyl-4,4'-diamino-dicyclohexylmethan, 3-Aminomethyl,3,5,5,-trimethylcyclohexylamin, 2,5- und/oder 2,6-Bis-(aminomethyl)-norbornan und/oder 1,4-Diaminomethylcyclohexan mit Dicarbonsäuren wie Oxalsäure, Adipinsäure, Azelainsäure, Azelainsäure, Decandicarbonsäure, Heptadecandicarbonsäure, 2,2,4- und/oder 2,4,4-Trimethyladipinsäure, Isophthalsäure und Terephthalsäure.

Auch Copolymere, die durch Polykondensation mehrerer Monomerer erhalten werden, sind geeignet, ferner Copolymere, die unter Zusatz von Aminocarbonsäuren wie ε-Aminocapronsäure, ω-Aminoundecansäure oder ω-Aminolaurinsäure oder ihren Lactamen, hergestellt werden.

Besonders geeignete amorphe Polyamide sind die Polyamide hergestellt aus Isophthalsäure, Hexamethylendiamin und weiteren Diaminen wie 4,4'-Diaminodicyclohexylmethan, Isophorondiamin, 2,2,4- und/oder 2,4,4-Trimethylhexamethylendiamin, 2,5- und/oder 2,6-Bis-(aminomethyl)-norbornen; oder aus Isophthalsäure, 4,4'-Diamino-dicyclohexylmethan und ε-Caprolactam; oder aus Isophthalsäure, 3,3'-Dimethyl-4,4'-diamino-dicyclohexylmethan und Laurinlactam; oder aus Terephthalsäure und dem Isomerengemisch aus 2,2,4- und/oder 2,4,4-Trimethylhexamethylendiamin.

Anstelle des reinen 4,4'-Diaminodicyclohexylmethans können auch Gemische der stellungsisomeren Diaminodicyclohexylmethane eingesetzt werden, die sich zusammensetzen aus
70 bis 99 Mol-% des 4,4'-Diamino-Isomeren
1 bis 30 Mol-% des 2,4'-Diamino-Isomeren
0 bis 2 Mol-% des 2,2'-Diamino-Isomeren und
gegebenenfalls entsprechend höher kondensierten Diaminen, die durch Hydrierung von Diaminodiphenylmethan technischer Qualität erhalten werden. Die Isophthalsäure kann bis zu 30 % durch Terephthalsäure ersetzt sein.

Die Polyamide weisen vorzugsweise eine relative Viskosität (gemessen an einer 1 gew.-%igen Lösung in m-Kresol bei 25°C) von 2,0 bis 5,0, besonders bevorzugt von 2,5 bis 4,0 auf.

Die Herstellung der erfindungsgemäßen Formmassen erfolgt durch Vermischen der Komponenten I), II) und III) und gegebenenfalls weiteren Polymeren und üblichen Additiven auf üblichen Mischaggregaten (vorzugsweise auf Mehrwalzenstühlen, Mischextrudern oder Innenknetern).

Gegenstand der Erfindung ist daher weiterhin ein Verfahren zur Herstellung der erfindungsgemäßen Formmassen, wobei man die Komponenten I), II) und III) und gegebenenfalls weitere Polymere und übliche Additive vermischt und bei erhöhter Temperatur, im allgemeinen bei Temperaturen von 150°C bis 300°C, compoundiert und extrudiert.

Den erfindungsgemäßen Formmassen können bei Herstellung, Aufarbeitung, Weiterverarbeitung und Endverformung die erforderlichen bzw. zweckmäßigen Additive zugesetzt werden, z.B. Antioxidantien, UV-Stabilisatoren, Peroxidzerstörer, Antistatika, Gleitmittel, Entformungsmittel, Flammschutzmittel, Füll- oder Verstärkerstoffe (Glasfasern, Kohlefasern, etc.), Farbmittel.

Die Endverformung kann auf handelsüblichen Verarbeitungsaggregaten vorgenommen werden und umfasst z.B. Spritzgießverarbeitung, Plattenextrusion mit gegebenenfalls anschließender Warmverformung, Kaltverformung, Extrusion von Rohren und Profilen, Kalander-Verarbeitung.

In den folgenden Beispielen sind die angegebenen Teile immer Gewichtsteile und die angegebenen % immer Gew.-%, wenn nicht anders angegeben.

### Beispiele:

### Komponenten

### ABS-Pfropfpolymerisat 1 (erfindungsgemäß)

50 Gew.-Teile (gerechnet als Feststoff) eines unter Verwendung eines Polybutadiensaatlatex mit einem mittleren Teilchendurchmesser d₅₀ von 48 nm durch radikalische Saatpolymerisation hergestellten anionisch emulgierten Polybutadienlatex mit einem mittleren Teilchendurchmesser d₅₀ von 137 nm und einem Gelgehalt von 88 Gew.-% werden mit Wasser auf einen Feststoffgehalt von ca. 20 Gew.-% gebracht, wonach auf 59°C erwärmt und mit 0,5 Gew.-Teilen Kaliumperoxodisulfat (gelöst in Wasser) versetzt wird.

Danach werden 50 Gew.-Teile eines Gemisches aus 73 Gew.-% Styrol, 27 Gew.-% Acrylnitril und 0,15 Gew.-Teile tert.-Dodecylmercaptan innerhalb 6 Stunden gleichmäßig zudosiert, parallel dazu wird 1 Gew.-Teil (gerechnet als Festsubstanz) des Natriumsalzes eines Harzsäuregemisches (Dresinate 731, Abieta Chemie GmbH, Gersthofen, Deutschland, gelöst in alkalisch eingestelltem Wasser) über einen Zeitraum von 6 Stunden zudosiert. Im Laufe der 6 Stunden wird die Reaktionstemperatur von 59°C auf 80°C angehoben. Nach einer zweistündigen Nachreaktionszeit bei 80°C wird der Pfropflatex nach Zugabe von ca. 1,0 Gew.-Teilen eines phenolischen Antioxidans mit einem Magnesiumsulfat/Essigsäure-Gemisch koaguliert und nach dem Waschen mit Wasser das resultierende feuchte Pulver bei 70°C getrocknet.

### ABS-Pfropfpolymerisat 2 (erfindungsgemäß)

60 Gew.-Teil (gerechnet als Feststoff) eines unter Verwendung des Polybutadiensaatlatex aus "ABS-Propfpolymerisat 1" mit einem mittleren Teilchendurchmesser d₅₀ von 137 nm und einem Gelgehalt von 88 Gew.-% als Saatlatex durch radikalische Saatpolymerisation hergestellten anionisch emulgierten Polybutadienlatex mit einem mittleren Teilchendurchmesser d₅₀ von 456 nm und einem Gelgehalt von 76 Gew.-% werden mit Wasser auf einen Feststoffgehalt von ca. 20 Gew.-% gebracht, wonach auf 59°C erwärmt und mit 0,5 Gew.-Teilen Kaliumperoxodisulfat (gelöst in Wasser) versetzt wird.

Danach werden 40 Gew.-Teile eines Gemisches aus 73 Gew.-% Styrol, 27 Gew.-% Acrylnitril und 0,12 Gew.-Teile tert.-Dodecylmercaptan innerhalb 6 Stunden gleichmäßig zudosiert, parallel dazu wird 1 Gew.-Teil (gerechnet als Festsubstanz) des Natriumsalzes eines Harzsäuregemisches (Dresinate 731, Abieta Chemie GmbH, Gersthofen, Deutschland, gelöst in alkalisch eingestelltem Wasser) über einen Zeitraum von 6 Stunden zudosiert. Im Laufe der 6 Stunden wird die Reaktionstemperatur von 59°C auf 80°C angehoben. Nach einer zweistündigen Nachreaktionszeit bei 80°C wird der Pfropflatex nach Zugabe von ca. 1,0 Gew.-Teilen eines phenolischen Antioxidans mit einem Magnesiumsulfat/Essigsäure-Gemisch koaguliert und nach dem Waschen mit Wasser das resultierende feuchte Pulver bei 70°C getrocknet.

### ABS-Pfropfpolymerisat 3 (erfindungsgemäß)

Die Vorschrift "ABS-Pfropfpolymerisat 2" wird wiederholt, wobei ein unter Verwendung des Latex aus "ABS-Pfropfpolymerisat 1" als Saatlatex hergestellter Polybutadienlatex mit einem mittleren Teilchendurchmesser d₅₀ von 445 nm und einem Gelgehalt von 84 Gew.-% als Pfropfgrundlage eingesetzt wird.

### ABS-Pfropfpolymerisat 4 (erfindungsgemäß)

Die Vorschrift "ABS-Pfropfpolymerisat 2" wird wiederholt, wobei ein unter Verwendung des Latex aus "ABS-Pfropfpolymerisat 1" als Saatlatex hergestellter Polybutadienlatex mit einem mittleren Teilchendurchmesser d₅₀ von 427 nm und einem Gelgehalt von 65 Gew.-% als Pfropfgrundlage eingesetzt wird.

### ABS-Pfropfpolymerisat 5 (Vergleich)

Die Vorschrift "ABS-Pfropfpolymerisat 1" wird wiederholt, wobei ein ohne Verwendung eines Polybutadiensaatlatex hergestellter Polybutadienlatex mit einem mittleren Teilchendurchmesser d₅₀ von 140 nm und einem Gelgehalt von 90 Gew.-% als Pfropfgrundlage eingesetzt wird.

### ABS-Pfropfpolymerisat 6 (Vergleich)

Die Vorschrift "ABS-Pfropfpolymerisat 2" wird wiederholt, wobei ein ohne Verwendung eines Polybutadiensaatlatex hergestellter Polybutadienlatex mit einem mittleren Teilchendurchmesser d₅₀ von 447 nm und einem Gelgehalt von 72 Gew.-% als Pfropfgrundlage eingesetzt wird.

### ABS-Pfropfpolymerisat 7 (Vergleich)

Die Vorschrift "ABS-Pfropfpolymerisat 2" wird wiederholt, wobei ein ohne Verwendung eines Polybutadiensaatlatex hergestellter Polybutadienlatex mit einem mittleren Teilchendurchmesser d₅₀ von 435 nm und einem Gelgehalt von 80 Gew.-% als Pfropfgrundlage eingesetzt wird.

### ABS-Pfropfpolymerisat 8 (Vergleich)

Die Vorschrift "ABS-Pfropfpolymerisat 2" wird wiederholt, wobei ein ohne Verwendung eines Polybutadiensaatlatex hergestellter Polybutadienlatex mit einem mittleren Teilchendurchmesser d₅₀ von 429 nm und einem Gelgehalt von 69 Gew.-% als Pfropfgrundlage eingesetzt wird.

### ABS-Pfropfpolymerisat 9 (erfindungsgemäß)

Die Vorschrift "ABS-Pfropfpolymerisat 1" wird wiederholt, wobei ein Polybutadienlatex mit einem mittleren Teilchendurchmesser d₅₀ von 40 nm und ein darauf basierender Polybutadienlatex mit einem mittleren Teilchendurchmesser d₅₀ von 111 nm und einem Gelgehalt von 91 Gew.-% eingesetzt wird.

### ABS-Pfropfpolymerisat 10 (erfindungsgemäß)

Die Vorschrift "ABS-Pfropfpolymerisat 2" wird wiederholt, wobei der Polybutadienlatex aus "ABS-Pfropfpolymerisat 9" mit einem mittleren Teilchendurchmesser d₅₀ von 111 nm und einem Gelgehalt von 91 Gew.-% als Saatlatex eingesetzt wird. Der resultierende zur Pfropfpolymerherstellung eingesetzte Polybutadienlatex besitzt einen mittleren Teilchendurchmesser d₅₀ von 391 nm und einen Gelgehalt von 80 Gew.-%.

### ABS-Pfropfpolymerisat 11 (erfindungsgemäß)

Die Vorschrift "ABS-Pfropfpolymerisat 10" wird wiederholt, wobei ein unter Verwendung des Polybutadienlatex aus "ABS-Pfropfpolymerisat 9" als Saatlatex (d₅₀ = 111 nm) hergestellter Polybutadienlatex mit einem mittleren Teilchendurchmesser d₅₀ von 402 nm und einem Gelgehalt von 85 Gew.-% als Pfropfgrundlage eingesetzt wird.

### ABS-Pfropfpolymerisat 12 (erfindungsgemäß)

Die Vorschrift "ABS-Pfropfpolymerisat 10" wird wiederholt, wobei ein unter Verwendung des Polybutadienlatex aus "ABS-Pfropfpolymerisat 9" als Saatlatex (d₅₀ = 111 nm) hergestellter Polybutadienlatex mit einem mittleren Teilchendurchmesser d₅₀ von 416 nm und einem Gelgehalt von 87 Gew.-% als Pfropfgrundlage eingesetzt wird.

### Harzkomponente

Statistisches Styrol/Acrylnitril-Copolymerisat (Styrol : Acrylnitril-Gewichtsverhältnis 72 : 28) mit einem M̅w von ca. 85.000 und M̅w/M̅n -1≤2 erhalten durch radikalische Lösungspolymerisation.

### Formmassen

Die oben beschriebenen Polymerkomponenten werden in den in Tabelle 1 angegebenen Anteilen, 2 Gew.-Teilen Ethylendiaminbisstearylamid und 0,1 Gew.-Teilen eines Silikonöls in einem Innenkneter vermischt und nach Granulierung zu Prüfstäben und zu einer ebenen Platte (zur Beurteilung der Oberfläche) verarbeitet.

### Folgende Daten werden ermittelt:

Kerbschlagzähigkeit bei Raumtemperatur (aₖ^{RT}) und bei -40°C (aₖ^{-40°C}) nach ISO 180/1A (Einheit:kJ/m²), Kugeldruckhärte (Hc) nach DIN 53 456 (Einheit: N/mm²), thermoplastische Fließfähigkeit (MVI) nach DIN 53 735 U (Einheit: cm³/10 min) und Oberflächenglanz nach DIN 67 530 bei einem Reflektionswinkel von 20° (Reflektometerwert)

Aus den Beispielen (Prüfdaten siehe Tabelle 2) ist ersichtlich, dass die erfindungsgemäßen Produkte sehr enge Schwankungsbreiten der wichtigsten Eigenschaften (insbesondere Zähigkeit und Verarbeitbarkeit) aufweisen.

Zwar zeigen die Vergleichsprodukte ähnliche Absolutwerte für die geprüften Eigenschaften, die Schwankungsbreiten sind jedoch viel größer.

**Tabelle 1: Zusammensetzungen der Formmassen**

| Beispiel | ABS-Pfropfpolymerisat | | | | | | | | | | | | Harzkomponente (Gew.-Teile) |
|---|---|---|---|---|---|---|---|---|---|---|---|---|---|
| | 1 (Gew.-Teile) | 2 (Gew.-Teile) | 3 (Gew.-Teile) | 4 (Gew.-Teile) | 5 (Gew.-Teile) | 6 (Gew.-Teile) | 7 (Gew.-Teile) | 8 (Gew.-Teile) | 9 (Gew.-Teile) | 10 (Gew.-Teile) | 11 (Gew.-Teile) | 12 (Gew.-Teile) | |
| 1 | 15 | 15 | -- | -- | -- | -- | -- | -- | -- | -- | -- | -- | 70 |
| 2 | 15 | -- | 15 | -- | -- | -- | -- | -- | -- | -- | -- | -- | 70 |
| 3 | 15 | -- | -- | 15 | -- | -- | -- | -- | -- | -- | -- | -- | 70 |
| 4 (Vergleich) | -- | -- | -- | -- | 15 | 15 | -- | -- | -- | -- | -- | -- | 70 |
| 5 (Vergleich) | -- | -- | -- | -- | 15 | -- | 15 | -- | -- | -- | -- | -- | 70 |
| 6 (Vergleich) | -- | -- | -- | -- | 15 | -- | -- | 15 | -- | -- | -- | -- | 70 |
| 7 | -- | -- | -- | -- | -- | -- | -- | -- | 15 | 15 | -- | -- | 70 |
| 8 | -- | -- | -- | -- | -- | -- | -- | -- | 15 | -- | 15 | -- | 70 |
| 9 | -- | -- | -- | -- | -- | -- | -- | -- | 15 | -- | -- | 15 | 70 |

**Tabelle 2: Prüfdaten der Formmassen**

| Beispiel | aₖ^{RT} (kJ/m²) | aₖ^{-40°C} (kJ/m²) | Hc (N/mm²) | MVI (cm³/10min) | Glanzgrad |
|---|---|---|---|---|---|
| 1 | 18.5 | 8.0 | 102 | 31.5 | 93 |
| 2 | 18.5 | 8.4 | 103 | 33.1 | 95 |
| 3 | 17.9 | 8.1 | 102 | 32.5 | 93 |
| 4 (Vergleich) | 19.9 | 9.1 | 103 | 36.6 | 91 |
| 5 (Vergleich) | 18.6 | 8.0 | 104 | 34.2 | 90 |
| 6 (Vergleich) | 17.1 | 7.4 | 105 | 33.0 | 94 |
| 7 | 17.8 | 7.3 | 110 | 33.5 | 94 |
| 8 | 17.3 | 7.8 | 110 | 34.0 | 95 |
| 9 | 17.6 | 7.5 | 111 | 34.0 | 94 |

## Patentansprüche

1. Verfahren zur Herstellung von Polymerzusammensetzungen enthaltend
I) mindestens ein Pfropfkautschukpolymerisat (I) erhalten durch Emulsionspolymerisation von Styrol und Acrylnitril im Gewichtsverhältnis 95:5 bis 50:50 in Gegenwart eines Butadienpolymerisatlatex (A) mit einem mittleren Teilchendurchmesser d₅₀ von 80 bis 220 nm,
II) mindestens ein Pfropfkautschukpolymerisat (II) erhalten durch Emulsionspolymerisation von Styrol und Acrylnitril im Gewichtsverhältnis 95:5 bis 50:50 in Gegenwart eines Butadienpolymerisatlatex (B) mit einem mittleren Teilchendurchmesser d₅₀ von 340 bis 480 nm und einem Gelgehalt von 50 bis 95 Gew.-%,
III) mindestens ein kautschukfreies Copolymerisat (III) aus Styrol und Acrylnitril im Gewichtsverhältnis 95:5 bis 50:50,
welches umfasst:
a) Herstellen des Butadienpolymerisatlatex (A) durch Saatpolymerisation unter Verwendung eines Saatlatex mit einem mittleren Teilchendurchmesser von 10 bis 100 nm,
b) Herstellen des Pfropfkautschukpolymerisats (I) durch Emulsionspolymerisation von Styrol und Acrylnitril im Gewichtsverhältnis 95:5 bis 50:50 in Gegenwart des Butadienpolymerisatlatex (A),
c) Herstellen des Butadienpolymerisatlatex (B) durch Saatpolymerisation unter Verwendung des Butadienpolymerisatlatex (A) als Saatlatex,
d) Herstellen des Pfropfkautschukpolymerisats (II) durch Emulsionspolymerisation von Styrol und Acrylnitril im Gewichtsverhältnis 95:5 bis 50:50 in Gegenwart des Butadienpolymerisatlatex (B),
e) Herstellen des kautschukfreien Copolymerisats (III) durch Polymerisation von Styrol und Acrylnitril im Gewichtsverhältnis 95:5 bis 50:50 und
f) Vermischen der Komponenten (I), (II) und (III) und gegebenenfalls weiteren Polymeren und üblichen Additiven auf üblichen Mischaggregaten.

2. Verfahren zur Herstellung von Polymerzusammensetzungen gemäß Anspruch 1, worin der Butadienpolymerisatlatex (A) einen mittleren Teilchendurchmesser d₅₀ von
90 bis 210 nm aufweist,
der Butadienpolymerisatlatex (B) einen mittleren Teilchendurchmesser d₅₀ von 350 bis 470 nm aufweist,
und der Butadienpolymerisatlatex (A) erhalten wird durch Saatpolymerisation unter Verwendung eines Saatlatex mit einem mittleren Teilchendurchmesser von 20 bis 90 nm.

3. Verfahren zur Herstellung von Polymerzusammensetzungen gemäß Ansprüchen 1 und 2, welches das Vermischen der Komponenten (I), (II) und (III) mit zusätzlich mindestens einem Harz ausgewählt aus aromatischem Polycarbonat, aromatischem Polyestercarbonat, Polyester, Polyamid oder Mischungen daraus, umfasst.

4. Verfahren zur Herstellung von Polymerzusammensetzungen gemäß Ansprüchen 1 bis 3,
**dadurch gekennzeichnet, dass** bei der Erzeugung der Pfropfkautschukpolymerisate der Monomerenzulauf derart durchgeführt wird, dass innerhalb der ersten Hälfte der Gesamtmonomerzudosierzeit 55 bis 90 Gew.-% der gesamten bei der Pfropfpolymerisation einzusetzenden Monomeren zudosiert werden und der verbleibende Monomeranteil innerhalb der zweiten Hälfte der Gesamtmonomerzudosierzeit zudosiert wird.

5. Verfahren zur Herstellung von Polymerzusammensetzungen gemäß Ansprüchen 1 bis 3, **dadurch gekennzeichnet, dass** bei der Erzeugung der Pfropfkautschukpolymerisate der Temperaturunterschied zwischen Beginn und Ende der Pfropfreaktion mindestens 15°C beträgt.

6. Verfahren zur Herstellung von Polymerzusammensetzungen gemäß Ansprüchen 1 bis 3, **dadurch gekennzeichnet, dass** man die Komponenten I), II) und III) vermischt und bei Temperaturen von 150°C bis 300°C compoundiert und extrudiert.

7. Verwendung der Polymerzusammensetzungen erhalten gemäß Ansprüchen 1 bis 6, zur Herstellung von Formteilen.

8. Verfahren zur Herstellung von Formteilen, welches das Herstellen der Polymerzusammensetzungen gemäß Ansprüchen 1 bis 6 und das Formen der gemäß Ansprüchen 1 bis 6 erhaltenen Polymerzusammensetzungen umfasst.

## Claims

1. Process for preparing polymer compositions containing
(I) at least one graft rubber polymer (I) obtained by emulsion polymerisation of styrene and acrylonitrile in a weight ratio of 95:5 to 50:50 in the presence of a butadiene polymer latex (A) with a mean particle diameter d₅₀ of 80 to 220 nm,
II) at least one graft rubber polymer (II) obtained by emulsion polymerisation of styrene and acrylonitrile in a weight ratio of 95:5 to 50:50 in the presence of a butadiene polymer latex (B) with a mean particle diameter d₅₀ of 340 to 480 nm and a gel content of 50 to 95 wt-%,
III) at least one rubber-free copolymer (III) of styrene and acrylonitrile in a weight ratio of 95:5 to 50:50,
which comprises:
a) preparation of the butadiene polymer latex (A) by seed polymerisation using a seed latex with a mean particle diameter of 10 to 100 nm,
b) preparation of graft rubber polymer (I) by emulsion polymerisation of styrene and acrylonitrile in a weight ratio of 95:5 to 50:50 in the presence of butadiene polymer latex (A)
c) preparation of the butadiene polymer latex (B) by seed polymerisation using butadiene polymer latex (A) as a seed latex,
d) preparation of the graft rubber polymer (II) by emulsion polymerisation of styrene and acrylonitrile in a weight ratio of 95:5 to 50:50 in the presence of butadiene polymer latex (B),
e) preparation of the rubber-free copolymer (III) by polymerisation of styrene and acrylonitrile in a weight ratio of 95:5 to 50:50, and
f) mixing the components (I), (II) and (III) and optionally further polymers and common additives in common mixing aggregates.

2. Process for preparing polymer compositions according to claim 1, wherein butadiene polymer latex (A) has a mean particle diameter d₅₀ of 90 to 210 nm,
the butadiene polymer latex (B) has a mean particle diameter d₅₀ of 350 to 470 nm, and the butadiene polymer latex (A) is obtained by seed polymerisation using a seed latex having a mean particle diameter of 20 to 90 nm.

3. Process for preparing polymer compositions according to claims 1 and 2, comprising mixing the components (I), (II) and (III) with additionally at least one resin selected from the group consisting of an aromatic polycarbonate, aromatic polyester carbonate, polyester, polyamide or mixtures thereof.

4. Process for preparing polymer compositions according to claims 1 to 3, **characterised in that** in the production of the graft rubber polymers the monomer feed is carried out in such a way that 55 to 90 wt-% of all the monomers to be used in the graft polymerisation are metered in during the first half of the overall time for metering in the monomers and the remaining proportion of the monomers is metered in during the second half of the overall time for metering in the monomers.

5. Process for preparing polymer compositions according to claims 1 to 3, **characterized in that** in the preparation of the graft rubber polymers the temperature difference between the start and end of the grafting reaction is at least 15° C.

6. Process for preparing polymer compositions according to claims 1 to 3, **characterized in that** the components I), II) and III) are mixed and are then compounded and extruded at temperatures from 150 °C to 300 °C.

7. Use of polymer compositions obtained according to claims 1 to 6 for the production of molded articles.

8. Process for the production of molded articles, comprising the preparation of polymer compositions according to claims 1 to 6 and forming the polymer compositions obtained according to claims 1 to 6.

## Revendications

1. Procédé servant à fabriquer des compositions polymères contenant
I) au moins un polymère de caoutchouc greffé obtenu par polymérisation (I) obtenu par polymérisation en émulsion de styrène et d'acrylonitrile dans le rapport de poids de 95:5 à 50:50 en présence d'un latex de polymère obtenu par polymérisation de butadiène (A) avec un diamètre de particule moyen d₅₀ allant de 80 à 220 nm,
II) au moins un polymère de caoutchouc greffé obtenu par polymérisation (II) obtenu par la polymérisation en émulsion de styrène et d'acrylonitrile dans le rapport de poids de 95:5 à 50:50 en présence d'un latex de polymère obtenu par polymérisation de butadiène (B) avec un diamètre de particule moyen d₅₀ allant de 340 à 480 nm et une teneur en gel allant de 50 à 95 % en poids,
III) au moins un copolymère obtenu par polymérisation (III) sans caoutchouc composé de styrène et d'acrylonitrile dans le rapport de poids de 95:5 à 50:50,
lequel comprend :
a) la fabrication du latex de polymère obtenu par polymérisation de butadiène (A) par polymérisation d'ensemencement en utilisant un latex d'ensemencement avec un diamètre de particule moyen allant de 10 à 100 nm,
b) la fabrication du polymère de caoutchouc greffé obtenu par polymérisation (I) par polymérisation en émulsion de styrène et d'acrylonitrile dans le rapport de poids de 95:5 à 50:50 en présence du latex de polymère obtenu par polymérisation de butadiène (A),
c) la fabrication du latex de polymère obtenu par polymérisation de butadiène (B) par polymérisation d'ensemencement en utilisant le latex de polymère obtenu par polymérisation de butadiène (A) en tant que latex d'ensemencement,
d) la fabrication du polymère de caoutchouc greffé obtenu par polymérisation (II) par polymérisation en émulsion de styrène et d'acrylonitrile dans le rapport de poids de 95:5 à 50:50 en présence du latex de polymère obtenu par polymérisation de butadiène (B),
e) la fabrication du copolymère obtenu par polymérisation sans caoutchouc (III) par polymérisation de styrène et d'acrylonitrile dans le rapport de poids de 95:5 à 50:50, et
f) le mélange des composants (I), (II) et (III) et éventuellement d'autres polymères et additifs classiques sur des appareils de mélange classiques.

2. Procédé servant à fabriquer des compositions de polymères selon la revendication 1, dans lequel le latex de polymère obtenu par polymérisation de butadiène (A) présente un diamètre de particule moyen d₅₀ allant de 90 à 210 nm,
le latex de polymère obtenu par polymérisation de butadiène (A) présente un diamètre de particule moyen d₅₀ allant de 350 à 470 nm,
et le latex de polymère obtenu par polymérisation de butadiène (A) est obtenu par polymérisation d'ensemencement en utilisant un latex d'ensemencement avec un diamètre de particule moyen allant de 20 à 90 nm.

3. Procédé servant à fabriquer des compositions de polymères selon les revendications 1 et 2, lequel comprend le mélange des composants (I), (II) et (III) à en supplément au moins une résine choisie parmi un polycarbonate aromatique, un carbonate de polyester aromatique, un polyester, un polyamide ou des mélanges de ces derniers.

4. Procédé servant à fabriquer des compositions de polymères selon les revendications 1 à 3,
**caractérisé en ce que** lors de la production des polymères de caoutchouc greffés obtenus par polymérisation, l'alimentation en monomères est effectuée de telle manière que dans le cadre de la première moitié du temps global d'ajout dosé de monomères 55 à 90 % en poids de l'ensemble des monomères à utiliser lors de la polymérisation par greffage sont ajoutés de manière dosée, et la fraction de monomères restante est ajoutée de manière dosée dans le cadre de la seconde moitié du temps global d'ajout dosé de monomères.

5. Procédé servant à fabriquer des compositions de polymères selon les revendications 1 à 3, **caractérisé en ce que** lors de la production des polymères de caoutchouc greffé obtenus par polymérisation, la différence de température entre le début et la fin de la réaction par greffage s'élève au moins à 15 °C.

6. Procédé servant à fabriquer des compositions de polymères selon les revendications 1 à 3, **caractérisé en ce que** les composants I), II) et III) sont mélangés et ils sont mélangés et extrudés à des températures allant de 150 °C à 300 °C.

7. Utilisation des compositions de polymères obtenues selon les revendications 1 à 6 afin de fabriquer des pièces moulées.

8. Procédé servant à fabriquer des pièces moulées, lequel comprend la fabrication des compositions de polymères selon les revendications 1 à 6 et le moulage des compositions de polymères obtenues selon les revendications 1 à 6.
